# FASCICULE DE BREVET EUROPEEN

(11) **EP 1 116 116 B1**
(45) Date de publication et mention de la délivrance du brevet: **28.02.2007**
(21) Numéro de dépôt: 00951638.6
(22) Date de dépôt: 30.06.2000
(51) Int. Cl.: G06F 11/20, G06F 15/80

(54) **PROCEDE DE RECONFIGURATION APPLICABLE A UN RESEAU D'ELEMENTS FONCTIONNELS IDENTIQUES**
REKONFIGURIERUNGSVERFAHREN FÜR EIN GATTER VON IDENTISCHEN FUNKTIONSELEMENTEN
RECONFIGURATION METHOD APPLICABLE TO AN ARRAY OF IDENTICAL FUNCTIONAL ELEMENTS

(30) Priorité: 02.07.1999 FR 9908554
(43) Date de publication de la demande: 18.07.2001
(73) Titulaire: COMMISSARIAT A L'ENERGIE ATOMIQUE, 75015 Paris (FR)
(72) Inventeur: Clermidy, Fabien, F-91300 Massy (FR); Collette, Thierry, 91940 Les Ulis (FR)
(74) Mandataire: Weber, Etienne Nicolas
(86) Numéro de dépôt international: PCT/FR2000/001861
(87) Numéro de publication internationale: WO 2001/002960

(56) Documents cités:
- VARVARIGOU T A ET AL: "NEW ALGORITHMS FOR RECONFIGURING VLSI/WSI ARRAYS" JOURNAL OF VLSI SIGNAL PROCESSING,NL,KLUWER ACADEMIC PUBLISHERS, DORDRECHT, vol. 3, no. 4, 1 octobre 1991 (1991-10-01), pages 329-344, XP000262126 ISSN: 0922-5773
- KIM J H ET AL: "AN ON-LINE RECONFIGURATION ALGORITHM OF WSI PROCESSOR ARRAYS" PROCEEDINGS OF THE INTERNATIONAL SYMPOSIUM ON CIRCUITS AND SYSTEMS. (ISCAS),US,NEW YORK, IEEE, vol. CONF. 25, 1992, pages 2953-2956, XP000338834 ISBN: 0-7803-0593-0
- POPLI S P ET AL: "A RECONFIGURABLE VLSI ARRAY FOR RELIABILITY AND YIELD ENHANCEMENT" PROCEEDINGS OF THE INTERNATIONAL CONFERENCE ON SYSTOLIC ARRAYS. FROM 1990 PROCEEDINGS OF THE INTERNATIONAL CONFERENCE ON APPLICATION SPECIFIC ARRAY PROCESSORS,US,WASHINGTON, IEEE COMP. SOC. PRESS, vol. CONF. 2, 1988, pages 631-642, XP000756117
- CLERMIDY F ET AL: "A new placement algorithm dedicated to parallel computers: bases and application" PROCEEDINGS 1999 PACIFIC RIM INTERNATIONAL SYMPOSIUM ON DEPENDABLE COMPUTING, PROCEEDINGS 1999 PACIFIC RIM INTERNATIONAL SYMPOSIUM ON DEPENDABLE COMPUTING, HONG KONG, 16-17 DEC. 1999, pages 242-249, XP002139232 1999, Los Alamitos, CA, USA, IEEE Comput. Soc, USA ISBN: 0-7695-0371-3

## Description

### Domaine technique

La présente invention concerne un procédé de reconfiguration applicable à un réseau d'éléments fonctionnels identiques.

Le domaine de l'invention est notamment celui des calculateurs parallèles formant un ensemble de processeurs interconnectés, en matrice, en anneau ou en hypercube, et celui des corrélateurs 1D ou 2D, des architectures de matrice de bloc de calculs de la transformée de Fourier rapide (FFT). Deux exemples du premier type d'applications sont ainsi donnés dans le document référencé [1] en fin de description.

### Etat de la technique antérieure

Les possibilités croissantes de la technologie micro-électronique, de même que l'évolution des architectures multiprocesseurs, conduisent à des calculateurs de plus en plus complexes tant en termes d'éléments qui les composent (portes électroniques, mémoires, registres, processeurs...), qu'en termes de complexité des logiciels utilisés.

Les concepteurs de tels calculateurs à structure parallèle ou massivement parallèle très intégrée doivent prendre en compte deux exigences antagonistes:
1- Des machines à structure parallèle ou massivement parallèle sont sujettes à des défauts dus au nombre très important de processeurs et à la complexité de ceux-ci, ce qui induit un mauvais rendement de fabrication et des fautes graves en fonctionnement normal.
2- Avec des technologies très avancées et des systèmes très intégrés, de plus en plus de processeurs peuvent être incorporés dans un circuit intégré spécifique (en anglais ASIC ou « Application Specific Integrated Circuit »), un module multipuce (en anglais MCM ou « Multichip Module ») ou une carte. Dans de tels systèmes le principal inconvénient est celui d'une bande passante, c'est-à-dire une quantité d'informations que l'on peut passer, limitée.

Pour répondre à la première de ces exigences, une solution de l'art connu consiste à remplacer les processeurs fautifs par des processeurs supplémentaires identiques aux autres du point de vue fonctionnel. Une telle solution, permettant une « tolérance aux fautes structurelle » , s'efforce alors à garantir le bon fonctionnement, et notamment la cohérence du réseau, pour ne pas pénaliser l'architecture. Elle implique une reconfiguration consistant dans le remplacement d'éléments fautifs par des éléments supplémentaires disponibles grâce à des éléments d'interconnexion et à des éléments d'intercommunication.

Dans un réseau de type 2D (ou en deux dimensions), les solutions proposées pour assurer la tolérance aux fautes consistent :
- A ajouter au système autant de lignes de processeurs qu'on veut tolérer de fautes. Cette solution est très simple et nécessite peu d'interconnexions supplémentaires, la reconfiguration s'effectuant par une simple dérivation (en anglais « Bypass ») des lignes où un processeur est fautif. Les pertes en performance sont alors limitées. Par contre, l'utilisation des processeurs supplémentaires est très mauvaise puisqu'il faut une ligne pour tolérer une faute, et qu'en cas de faute d'une dérivation le système complet est mis en défaut.
- Ou, à ajouter des commutateurs, des processeurs supplémentaires, et des connexions au réseau normal.

Comme décrit dans le document référencé [2], un réseau correspondant à ce second type de solution et appelé « m-Track, n-Spare » (ou « m chemins, n supplémentaires ») se compose de processeurs 10, de commutateurs et de connexions supplémentaires. Deux sortes de commutateurs sont utilisés : les commutateurs 11 reliant les processeurs aux connexions (PT pour « Processor to Track ») et les commutateurs 12 reliant les connexions entre elles (TT pour « Track-to-Track »). Toutes les liaisons du réseau sont bidirectionnelles, c'est-à-dire que les communications peuvent aller dans les deux sens dans chaque connexion. Des processeurs supplémentaires 13 (sp) sont positionnés aux frontières du réseau. Ces processeurs, pour que la méthode de reconfiguration soit efficace, doivent être placés au moins sur une ligne et une colonne du réseau.

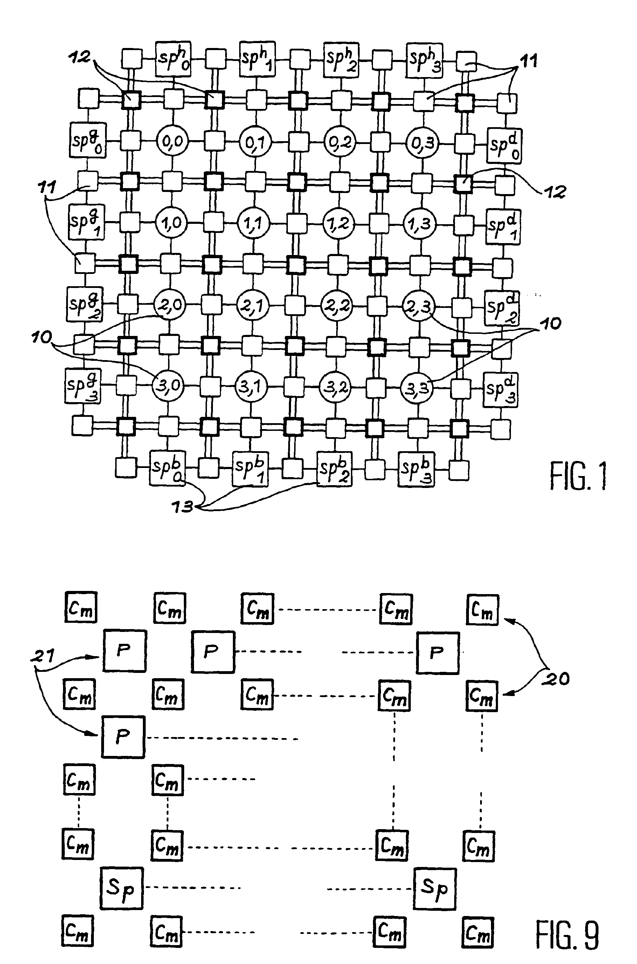

La figure 1 illustre un exemple de réseau de type « 2-Track, 1-Spare ». Des processeurs supplémentaires 13 (sp) sont placés tout autour du réseau et servent à reconfigurer le réseau en cas de faute des processeurs utiles 10. Des commutateurs 11, 12 sont utilisés pour permettre la reconfiguration. Le réseau comprend ici 200 % de connexions supplémentaires par rapport aux connexions dites fonctionnelles.

L'homme de métier peut alors utiliser une méthode de reconfiguration, basée sur des codes correcteurs d'erreur, se décomposant en deux phases:
- la première consiste, pour chaque processeur fautif, à trouver un chemin de compensation qui contourne le processeur fautif et le remplace par un processeur supplémentaire ;
- en cas de réussite de la première phase, chaque processeur est, le long du chemin de compensation, remplacé par son plus proche voisin, en allant ainsi, par des changements en cascade, jusqu'à un processeur supplémentaire. La grille fonctionnelle est ainsi conservée.

La méthode de reconfiguration considérée ci-dessus possède deux désavantages majeurs :
- elle n'est pas adaptée au cas des liaisons monodirectionnelles ; dans ce cas en effet, deux bus de connexion, un aller et un retour, sont nécessaires pour connecter le processeur considéré à chacun de ses voisins.
- le nombre d'éléments de commutation traversés entre deux processeurs voisins logiquement n'est pas déterministe, ce qui rend la méthode inefficace pour traiter le cas des communications synchrones entre processeurs.

Le document référencé [3] décrit de nouveaux algorithmes de reconfiguration de réseaux VLSI/WSI. Il décrit, notamment, un algorithme de reconfiguration applicable à un réseau d'éléments fonctionnels identiques parallèles avec tolérance aux fautes de ces éléments fonctionnels, le réseau comportant des éléments fonctionnels supplémentaires ainsi que des éléments d'interconnexion.

Pour résoudre les inconvénients des documents de l'art connu, le procédé de l'invention a pour objectif de résoudre le problème de la tolérance aux fautes dans une architecture massivement parallèle où les éléments fonctionnels sont très fortement couplés, en proposant une solution répondant aux contraintes suivantes :
- obtenir un réseau tolérant aux fautes avec des connexions pouvant être monodirectionnelles ;
- limiter fortement les supports de communication non fonctionnels du réseau ;
- limiter le temps de communication entre éléments fonctionnels en limitant le nombre de commutateurs de reconfiguration traversés entre deux éléments fonctionnels ;
- autoriser une plus grande souplesse dans le choix du nombre d'éléments fonctionnels supplémentaires ;
- disposer d'une solution capable de supporter des topologies différentes, notamment en matrice, en anneau, ou en hypercube.

### Exposé de l'invention

La présente invention concerne un procédé de reconfiguration d'un réseau d'éléments fonctionnels identiques parallèles avec tolérance aux fautes de ces éléments fonctionnels, le réseau comportant lesdits éléments fonctionnels de base, des éléments fonctionnels supplémentaires et des éléments d'interconnexion de ces éléments fonctionnels, ledit procédé comprenant :
- une étape de placement des éléments fonctionnels du réseau logique ;
- une étape de routage consistant en une programmation des éléments d'interconnexion sur le réseau physique en choisissant le nombre maximal de ces éléments d'interconnexion pouvant être traversés entre deux éléments fonctionnels voisins utilisant un algorithme de recherche du plus court chemin, caractérisé en ce qu'il comprend une unité de contrôle et en ce que :

- on détermine un ordre de placement des éléments fonctionnels du réseau qui est constitué d'un élément fonctionnel d'origine et d'une suite d'éléments fonctionnels englobant tous les éléments fonctionnels ;
- pour chacun des éléments fonctionnels on essaie de le placer en commençant par sa place logique puis, si nécessaire en cas d'échec, en chacune des places situées à une distance 1, à une distance 2... de la place logique de cet élément fonctionnel, avec comme restriction qu'une'et une seule place supplémentaire doit être utilisée par rapport aux places possibles des éléments fonctionnels précédemment placés, en arrêtant lorsque S+1 places ont été essayées, S étant le nombre d'éléments fonctionnels supplémentaires ;
- si S+1 places ont été essayées sans succès, on revient à l'élément fonctionnel précédent dans l'ordre de placement et on passe à la place suivante pour cet élément fonctionnel ;
- éventuellement lorsque tous les éléments fonctionnels sont placés, on vérifie pour chaque dimension du réseau que l'ordre logique est respecté pour chaque couple d'éléments fonctionnels, si ce n'est pas le cas on inverse les places de ces éléments fonctionnels.

Dans un mode de réalisation, l'ordre de placement est défini ainsi : l'élément fonctionnel d'origine est l'élément fonctionnel en haut à gauche, les éléments fonctionnels suivants sont les éléments fonctionnels à droite et en bas de l'élément fonctionnel d'origine, et ainsi de suite en respectant la diagonale.

On peut également découper le réseau en blocs et définir un ordre de placement des blocs en partant d'un bloc d'origine et en parcourant tous les blocs de bloc voisin en bloc voisin, les places pour les éléments fonctionnels d'un bloc ne comportant pas de place logique des éléments fonctionnels des blocs placés précédemment.

Avantageusement ce procédé de l'invention peut être mis en oeuvre soit de manière statique, soit de manière dynamique en cours de fonctionnement.

Il paraît important de préciser les deux points suivants :
- Le procédé de l'invention permet d'inclure facilement des possibilités de tolérance aux fautes au niveau des interconnexions et des éléments d'interconnexion.
- Le procédé de l'invention est à contre-pied des procédés antécédents dans le sens où les caractéristiques du réseau que sont le nombre de liens supplémentaires et l'organisation des éléments d'interconnexions ne sont pas imposés par le procédé, ce qui permet une plus grande souplesse dans le choix de l'architecture tolérante aux fautes.

### Brève description des dessins

La figure 1 illustre un réseau de processeurs de l'art connu.
Les figures 2A et 2B illustrent un exemple de réseau obtenu par le procédé de l'invention.
La figure 3 illustre la notion de distance dans le réseau illustré sur la figure 2B.
La figure 4 illustre un organigramme du procédé de l'invention.
Les figures 5A et 5B illustrent un exemple de non cohérence du procédé de l'invention après le placement des éléments fonctionnels.
Les figures 6A, 6B et 6C illustrent un exemple d'algorithme de placement déduit directement du procédé de l'invention.
La figure 7 illustre un algorithme par bloc déduit du procédé de l'invention.
Les figures 8A et 8B illustrent des exemples de reconfiguration d'un réseau d'éléments fonctionnels dans une topologie de matrice.
La figure 9 illustre la composition d'un réseau de processeurs obtenu par le procédé de l'invention.
La figure 10 illustre les entrées et sorties d'un élément d'interconnexion interne au réseau de la figure 9.
Les figures 11A à 11H illustrent les entrées et sorties des éléments d'interconnexion aux frontières du réseau de la figure 9.
La figure 12 illustre le réseau de la figure 9, avec les liaisons entre processeurs et éléments d'interconnexion.
Les figures 13A à 13C illustrent les communications minimales dans le réseau de la figure 9.
Les figures 14A et 14B illustrent la réalisation pratique d'un élément d'interconnexion interne au réseau de la figure 9 à partir d'un multiplexeur 6 vers 1.
La figure 15 illustre un exemple de mise en oeuvre du réseau de la figure 9.
Les figures 16 à 19 illustre plusieurs exemples de réseau de processeurs de type hypercube, à savoir un hypercube de dimension 3 sur la figure 16, un hypercube de structure régulière virtuelle avec quatre processeurs supplémentaires sur la figure 17, un exemple de reconfiguration d'hypercube comprenant trois processeurs fautifs déduits du procédé de l'invention sur la figure 18, et un hypercube de dimension 4 comprenant une ligne de processeurs supplémentaires sur la figure 19.
La figure 20 illustre l'architecture d'un corrélateur 2D.
La figure 21 illustre un exemple d'utilisation du procédé de l'invention dans la structure matricielle de l'architecture illustrée sur la figure 20.

### Exposé détaillé de modes de réalisation

La présenté invention concerne un procédé de reconfiguration d'un réseau d'éléments fonctionnels identiques.

### Procédé de reconfiguration

Dans la structure « m-Track, n-Spare » de l'art connu, illustrée sur la figure 1, le procédé de reconfiguration consiste à rechercher un chemin appelé « chemin de compensation » pour remplacer un élément fonctionnel élémentaire fautif par un élément fonctionnel supplémentaire. Ensuite en partant de cet élément fonctionnel élémentaire fautif, chaque élément fonctionnel est remplacé par l'élément fonctionnel suivant disponible, le plus proche sur le chemin. Mais ce procédé n'est vraiment efficace que lorsque des éléments fonctionnels supplémentaires existent dans au moins une ligne et une colonne, ce qui n'est pas possible avec une ligne d'éléments fonctionnels supplémentaires et deux chemins monodirectionnels. De plus un tel procédé ne permet pas de réduire le nombre de commutateurs dans les chemins de communication.

Par contre le procédé de reconfiguration de l'invention est basé sur une technique de placement décorrélée du routage.

Le placement consiste en un placement physique d'éléments fonctionnels voisins logiques. La place logique d'un élément fonctionnel est la place que cet élément fonctionnel occupe dans le réseau sans élément fonctionnel fautif ; la place physique d'un élément fonctionnel est la place occupée par cet élément fonctionnel après application du procédé lorsqu'une faute a été détectée. Le placement est sûr d'aboutir à condition que le nombre d'éléments fonctionnels fautifs soit inférieur ou égal au nombre d'éléments fonctionnels supplémentaires.

Le routage consiste en une programmation des éléments d'interconnexion. Le nombre de commutateurs qui peut être traversé entre deux éléments fonctionnels voisins est choisi. Ce nombre est limité : trois ou quatre commutateurs conduisent à un bon rendement de reconfiguration. L'algorithme de routage peut ainsi essayer le plus grand nombre de possibilités de routage dans un temps très court avec un algorithme approprié.

Dans les systèmes de l'art antérieur, la programmation des éléments de commutation est assurée dès lors qu'une place de remplacement est trouvée pour chaque élément fonctionnel fautif en suivant un algorithme précis. Les algorithmes de placement des éléments fonctionnels sur la grille physique et de routage des éléments de commutation sont indissociables.

Dans le procédé de l'invention, seul le placement des éléments fonctionnels est original. Le routage des éléments d'interconnexion est effectué par un algorithme de recherche du plus court chemin connu de l'homme de métier, cet algorithme étant utilisable dans l'invention grâce aux restrictions faites sur la longueur des chemins et, notamment, sur le nombre d'éléments d'interconnexions traversés.

### • Etape de placement

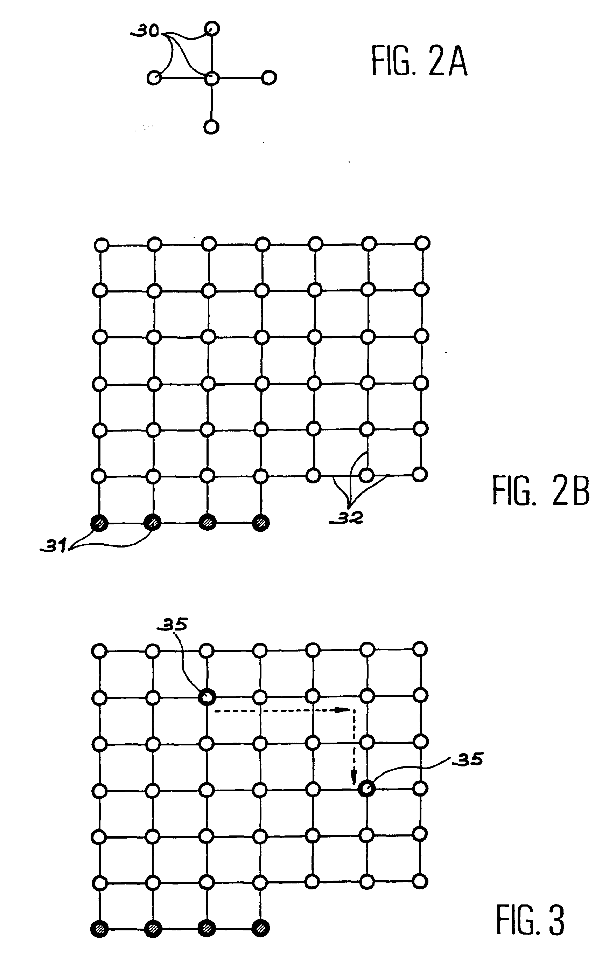

Sur les figures 2 et 3 est illustré schématiquement un réseau d'éléments fonctionnels élémentaires identiques 30, chaque élément fonctionnel de base étant logiquement connecté avec un nombre identique d'éléments fonctionnels voisins du même réseau, à l'exception des éléments fonctionnels situés sur les bords du réseau, et d'éléments fonctionnels supplémentaires 31 prévus chacun pour remplacer un des éléments fonctionnels élémentaires 30 en cas de faute de celui-ci.

La figure 2A illustre un élément fonctionnel du réseau avec ses quatre voisins logiques. La figure 2B illustre un exemple de réseau, les éléments fonctionnels supplémentaires 31 étant indiqués en grisé, les liaisons 32 étant les liaisons logiques.

La figure 3 illustre la notion de distance entre deux éléments fonctionnels : celle-ci est le nombre minimum de connexions nécessaires pour aller d'un élément fonctionnel à un autre. Les deux éléments fonctionnels 35 cerclés de noir sont à une distance de cinq l'un de l'autre, deux éléments fonctionnels voisins étant à une distance unité.

Le procédé de l'invention a pour objet de placer les éléments fonctionnels dans le réseau, de manière à minimiser la somme des distances entre tous les éléments fonctionnels voisins. Ce procédé présente les caractéristiques suivantes :
- Critère 1 : pour choisir les places des éléments fonctionnels afin d'assurer une distance minimale entre éléments fonctionnels voisins, on effectue un placement autour de la position de l'élément fonctionnel d'origine en utilisant les éléments fonctionnels à une distance 0 puis 1, puis 2, puis 3 ... de la place logique de cet élément fonctionnel.
- Critère 2 : pour s'assurer qu'un placement est possible pour tous les éléments fonctionnels du réseau, quel que soit le nombre d'éléments fonctionnels fautifs ou non validés, on définit tout d'abord un ordre de placement des éléments fonctionnels qui est constitué d'un élément fonctionnel d'origine et d'une suite d'éléments fonctionnels englobant tous les éléments fonctionnels. Chaque élément fonctionnel nouveau est choisi parmi les éléments fonctionnels voisins, logiquement des éléments fonctionnels précédents. Puis, en suivant cet ordre allant de l'élément fonctionnel d'origine au dernier élément fonctionnel, on définit S+1 places possibles, S étant le nombre d'éléments fonctionnels supplémentaires, et l'ordre des places de chaque élément fonctionnel, avec comme restriction qu'une et une seule place supplémentaire doit être utilisée par rapport aux places possibles des éléments fonctionnels précédemment placés.
- Critère 3: pour assurer la cohérence globale du réseau, on met éventuellement en place en fin de placement un mécanisme de respect de la cohérence qui consiste en une détection des inversions logiques de chaque couple des éléments fonctionnels voisins logiquement dans chaque dimension et en une inversion des places des deux éléments fonctionnels lorsqu'une telle inversion est détectée.

Pour remplir ces différents critères, le procédé de l'invention comprend les étapes suivantes :
- on détermine un ordre de placement des éléments fonctionnels comme défini ci-dessus au critère 2 ;
- pour chacun des éléments fonctionnels, on essaie de le placer en commençant par sa place logique, puis si nécessaire en cas d'échec (élément fonctionnel fautif ou place occupée par un autre élément fonctionnel) en chacune des places situées à une distance 1, à une distance 2 etc.., tout en respectant la loi énoncée dans le critère 2 : c'est-à-dire qu'une et une seule place supplémentaire doit être utilisée par rapport aux places possibles des éléments fonctionnels précédemment placés. Si la place ne respecte pas cette loi, on essaie une autre place, qui peut être à une distance plus grande si nécessaire. On arrête lorsque S+1 places ont été essayées ;
- si S+1 places ont été essayées sans succès, on remonte à l'élément fonctionnel précédent dans l'ordre de placement et on passe à la place suivante pour cet élément fonctionnel ;
- lorsque les éléments fonctionnels sont tous placés, on vérifie pour chaque dimension du système, par-exemple en ligne et en colonne pour un tableau d'éléments fonctionnels, que l'ordre logique est respecté pour chaque couple d'éléments fonctionnels. Si ce n'est pas le cas, on inverse les places de ces éléments fonctionnels.

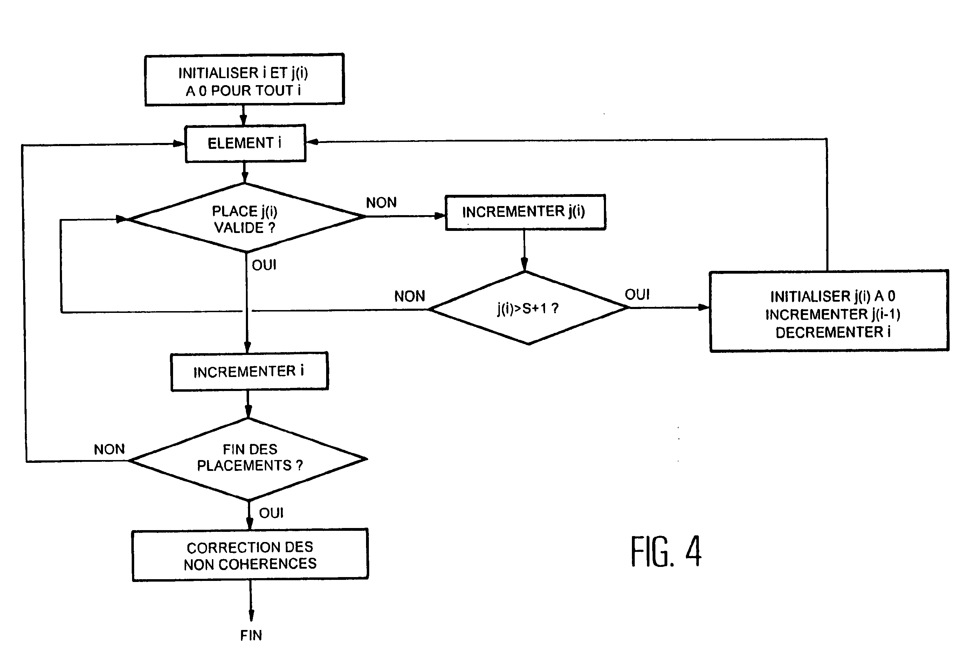

L'organigramme illustré sur la figure 4 résume les trois dernières étapes de ce procédé.

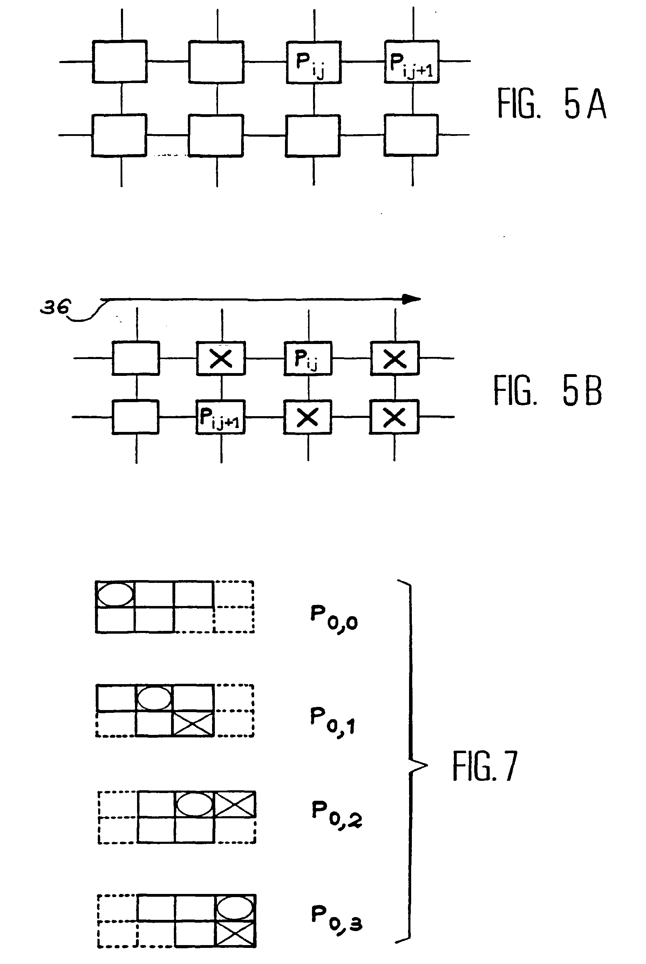

Les figures 5A et 5B illustrent un exemple de non cohérence dans le réseau après le placement des éléments fonctionnels. En effet sur la figure 5A les deux éléments fonctionnels Pᵢⱼ et Pᵢⱼ₊₁ sont voisins logiques et Pᵢⱼ se situe avant Pᵢⱼ₊₁. Sur la figure 5B l'élément fonctionnel Pᵢⱼ se trouve placé après l'élément fonctionnel Pᵢⱼ₊₁ contrairement à son ordre logique, la flèche 36 illustrant l'ordre de placement, les endroits marqués d'une croix indiquant des places occupées par des éléments fonctionnels fautifs.

Cet algorithme de placement est certain d'aboutir à une solution du moment que le nombre d'éléments fautifs est inférieur ou égal au nombre d'éléments fonctionnels supplémentaires.

Deux types d'algorithmes de placement peuvent être induits du procédé de l'invention.

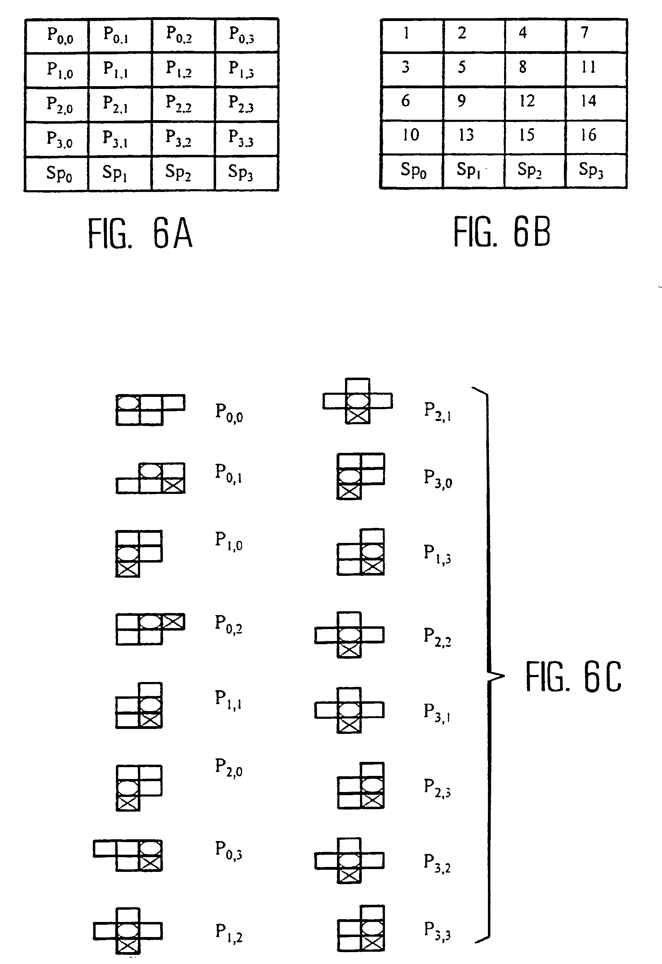

Le premier type d'algorithme consiste en une utilisation directe du procédé de l'invention et est illustré par la figure 6 avec une structure de 4x4 éléments fonctionnels élémentaires et 4 éléments fonctionnels supplémentaires.

La figure 6A illustre le réseau logique, les voisins logiques d'un élément fonctionnel étant aux quatre points cardinaux de celui-ci. La figure 6B illustre l'ordre de placement des éléments fonctionnels et la figure 6C illustre les places possibles de ces éléments fonctionnels, les places à une distance de 1 de la place logique de l'élément fonctionnel étant essayées avant les places à une distance de 2, etc.

Sur cette figure 6C on utilise les représentations suivantes:
○ : place logique de l'élément fonctionnel
×: place nouvelle de l'élément fonctionnel
▭: : place possible de l'élément fonctionnel

L'ordre de placement est défini ainsi: l'élément fonctionnel d'origine est l'élément fonctionnel en haut à gauche P_{0,0}. Les éléments fonctionnels suivants sont les éléments fonctionnels à droite P_{0,1} et en bas P_{1,0} de l'élément fonctionnel d'origine P_{0,0}, et ainsi de suite en respectant la diagonale P_{1,0} ; P_{0,2} ; P_{1,1}... (voir figure 6B). Cette solution, qui est une des solutions possibles pour le choix de l'ordre de placement, a l'avantage de permettre de bien respecter le critère 1 dans la suite, et donc de fournir un placement qui permet un bon routage. A partir de cet ordre de placement, les places de chaque élément fonctionnel sont choisies parmi les cinq places définies sur la figure 6C, leur ordre de sélection respectant le critère 1. On note que, pour chaque élément fonctionnel, le critère 2 est respecté.

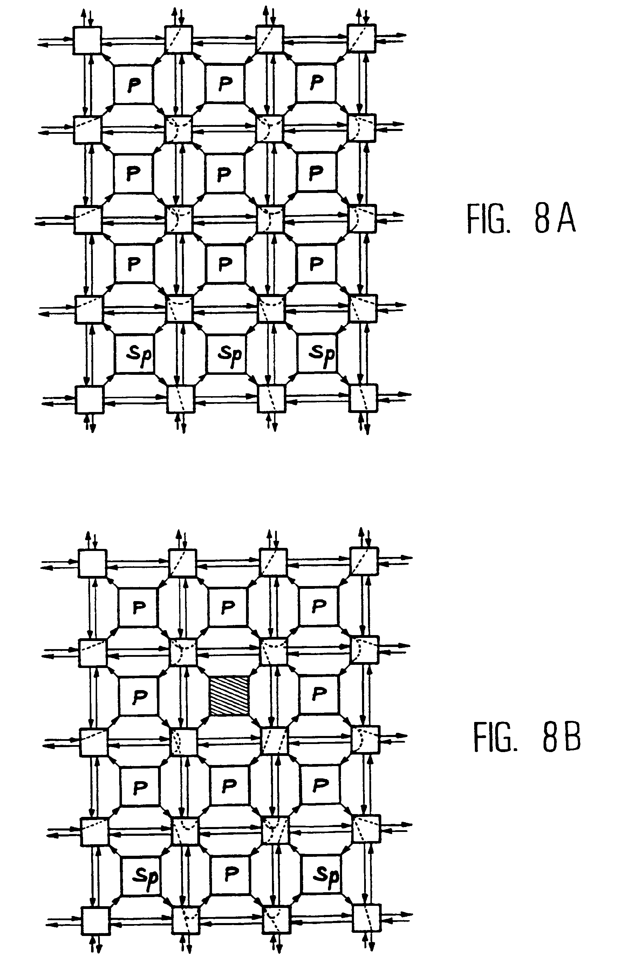

Le deuxième type d'algorithme de placement est une application du procédé de l'invention en découpant le réseau en blocs d'éléments fonctionnels. Après avoir défini un ordre de placement des blocs, en partant d'un bloc d'origine on parcourt tous les blocs, de bloc voisin en bloc voisin. Si un tel algorithme est appliqué à chaque bloc en tenant compte d'une règle de placement telle que les places possibles pour les éléments fonctionnels d'un bloc ne comportent pas de place logique des éléments fonctionnels des blocs placés précédemment, le placement est sûr. La figure 7 illustre ce deuxième type d'algorithme en considérant un bloc formé d'une ligne de quatre éléments fonctionnels. Les lignes d'éléments fonctionnels sont alors placées en partant de la ligne du haut pour aller à la ligne du bas. Pour chaque ligne on utilise des places de cette ligne, à laquelle appartiennent les éléments fonctionnels logiques, et de la ligne immédiatement inférieure, ce qui permet de respecter la règle ci-dessus. Pour chaque ligne, l'ordre de placement est défini par l'élément fonctionnel d'origine situé à l'extrême gauche et puis par les éléments fonctionnels suivants à droite. Les cinq places possibles sont alors définies comme le montre la figure 7. Le même algorithme de placement est utilisé pour chaque ligne. La vérification de cohérence, inutile dans l'exemple considéré, ne doit alors s'effectuer que sur les lignes. L'avantage de cette variante du procédé de l'invention réside dans la rapidité de l'algorithme (moins de retour en arrière, vérification de cohérence plus courte) associée à un bon placement lorsque les blocs sont bien dimensionnés par rapport aux éléments supplémentaires, ce qui est le cas de l'exemple considéré.

La figure 8A illustre un exemple de configuration du réseau dans une topologie de matrice, sans élément fonctionnel fautif, pour des connexions ouest-est et nord-sud. La figure 8B illustre un exemple de reconfiguration du réseau dans le cas d'un élément fonctionnel fautif, représenté avec des hachures.

On remarque que le passage par les éléments de commutation est obligatoire même en l'absence d'éléments fautifs, ce qui donne une certaine cohérence pour l'ensemble du système.

### • Etape de routage

Cette étape est effectuée à l'aide d'algorithmes de recherche du plus court chemin et de recherche en profondeur connus de l'homme du métier.

De façon à rester cohérent avec les objectifs fixés en introduction, le nombre d'éléments d'interconnexion entre éléments fonctionnels voisins logiques est limité à un petit nombre, typiquement 3 ou 4. Le nombre de chemins possibles pour aller d'un élément fonctionnel à un élément fonctionnel voisin est connu et assez faible, moins d'une dizaine en moyenne. On suppose que tous ces chemins sont connus mais ils peuvent également être calculés par un algorithme de recherche du plus court chemin. Un exemple simple de l'algorithme de routage en recherche en profondeur des éléments d'interconnexion est donné ci-dessous:
*Initialiser i et j à 0*
   *Point 0 : Pour le couple Cⱼ d'éléments fonctionnels voisins:*
   *Point 1: Si le chemin Cⱼ(i) existe :*
   *essayer le routage de Cⱼ avec ce chemin*
   *Si il y a conflit sur un élément d'interconnexion*
   *incrémenter i et retour au Point 1*
   *Sinon,*
   *Si il existe d'autres couples C d'éléments fonctionnels :*
   *incrémenter j et retour au Point 0*
   *Sinon,*
   *routage réussi, fin*
*Sinon,*
   *Si il existe un couple Cₖ d'éléments fonctionnels dont le routage rend le routage de Cⱼ impossible*
   *Supprimer tous les routages entre Cₖ et Cⱼ*
   *Incrémenter le chemin i de Cₖ et retour au point 0*
   *Sinon*
   *Routage impossible*
   *Fin*

Ceci n'est qu'un exemple de routage connu de l'homme du métier permettant de donner un exemple de réalisation du procédé de reconfiguration de l'invention.

On va considérer ci-dessous successivement des exemples de réalisation de réseaux auxquels s'applique le procédé de l'invention, dans lesquels les éléments fonctionnels sont des processeurs.

### Exemple d'un réseau de processeurs parallèles

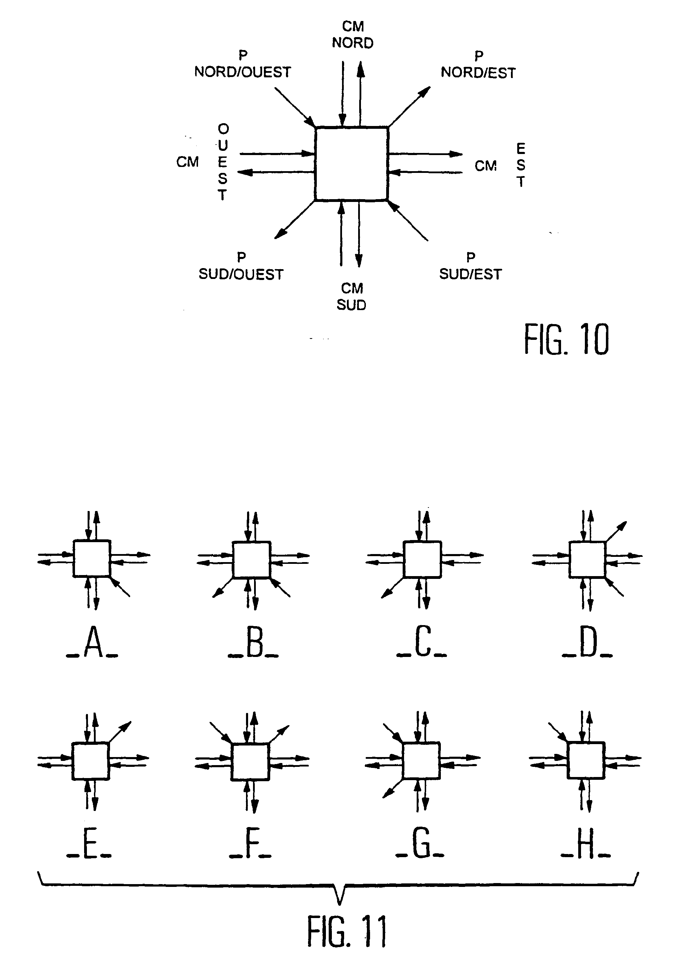

Un réseau de processeurs auquel s'applique l'invention, comme illustré sur la figure 9, est basé sur une matrice de processeurs élémentaires quelconques P à deux entrées et deux sorties, reliés entre eux par des éléments d'interconnexion Cm. Le réseau est composé d'un ensemble de lignes d'éléments interconnexion 20 et de lignes de processeurs 21 disposées alternativement. Chaque processeur P est entouré de quatre éléments d'interconnexion Cm. Les éléments de bord du réseau sont des éléments d'interconnexion Cm. Les lignes de processeurs sont des lignes de processeurs élémentaires P et la dernière ligne de processeurs est une ligne de processeurs élémentaires supplémentaires Sp. Une telle caractéristique permet d'obtenir une plus grande souplesse dans le choix du nombre de processeurs supplémentaires contrairement au dispositif de l'art antérieur illustré sur la figure 1, dans lequel avec une ligne et une colonne de processeurs supplémentaires la proportion de processeurs supplémentaires varie en fonction du produit du nombre de lignes par le nombre de colonnes.

Les éléments d'interconnexion Cm permettent de réaliser les liaisons, par commutation du réseau, entre les différents processeurs P. Un élément Cm de ce type est illustré sur la figure 10, avec ses différentes entrées et sorties. Il possède six entrées et six sorties monodirectionnelles reliées respectivement aux entrées des processeurs sud-ouest et nord-est, aux sorties des processeurs nord-ouest et sud-est, et aux quatre entrées et quatre sorties des éléments d'interconnexion situés au nord, à l'est, au sud et à l'ouest. Un élément ainsi représenté correspond à un élément du centre du réseau.

Comme illustré sur les figures 11A à 11H, les éléments d'interconnexion des bords du réseau possèdent moins d'entrées et/ou moins de sorties selon leur emplacement.

On a ainsi :
- Cm nord-ouest : figure 11A;
- Cm nord : figure 11B ;
- Cm nord-est : figure 11C ;
- Cm ouest : figure 11D ;
- Cm sud-ouest : figure 11E ;
- Cm sud : figure 11F ;
- Cm est : figure 11G ;
- Cm sud-est : figure 11H.

Chaque sortie d'un élément d'interconnexion Cm peut être reliée à n'importe quelle entrée. Il est possible de changer de façon dynamique la manière (appelée configuration) de réaliser ces liaisons au moyen, par exemple, de registres de configuration associés à une commande de configuration.

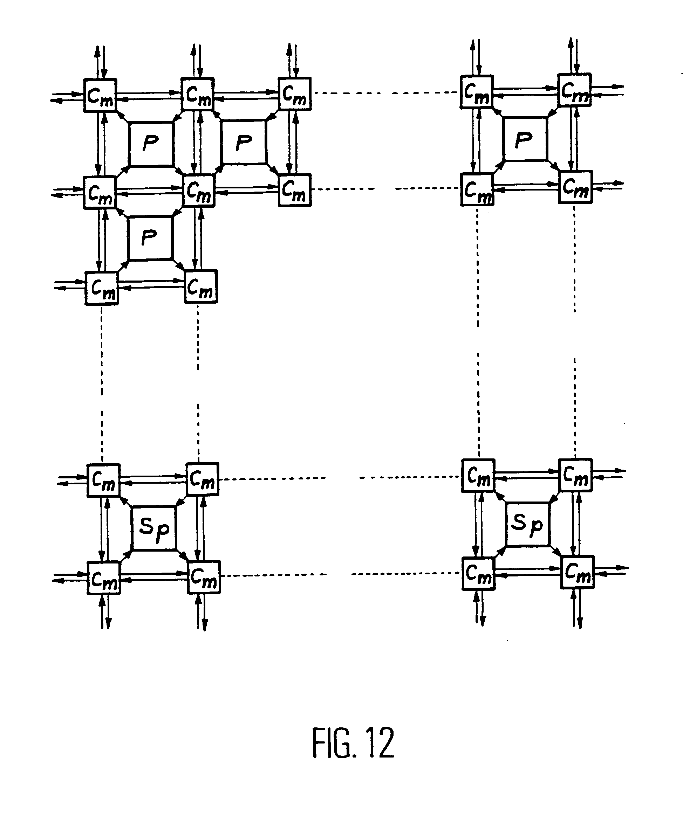

Comme illustré sur la figure 12, dans ce réseau chaque processeur P est relié à quatre éléments d'interconnexion Cm, deux de ces éléments Cm diamétralement opposés étant connectés aux deux entrées du processeur et les deux autres éléments Cm, également diamétralement opposés, étant connectés aux deux sorties du processeur. Ces éléments d'interconnexion Cm sont de plus reliés entre eux par des liaisons horizontales et verticales.

Chaque communication entre processeurs P se fait par l'intermédiaire d'éléments d'interconnexion Cm. On obtient ainsi 50 % de connexions internes supplémentaires par rapport aux connexions « fonctionnelles » et des connexions supplémentaires avec l'extérieur réduites aux connexions des processeurs supplémentaires Sp.

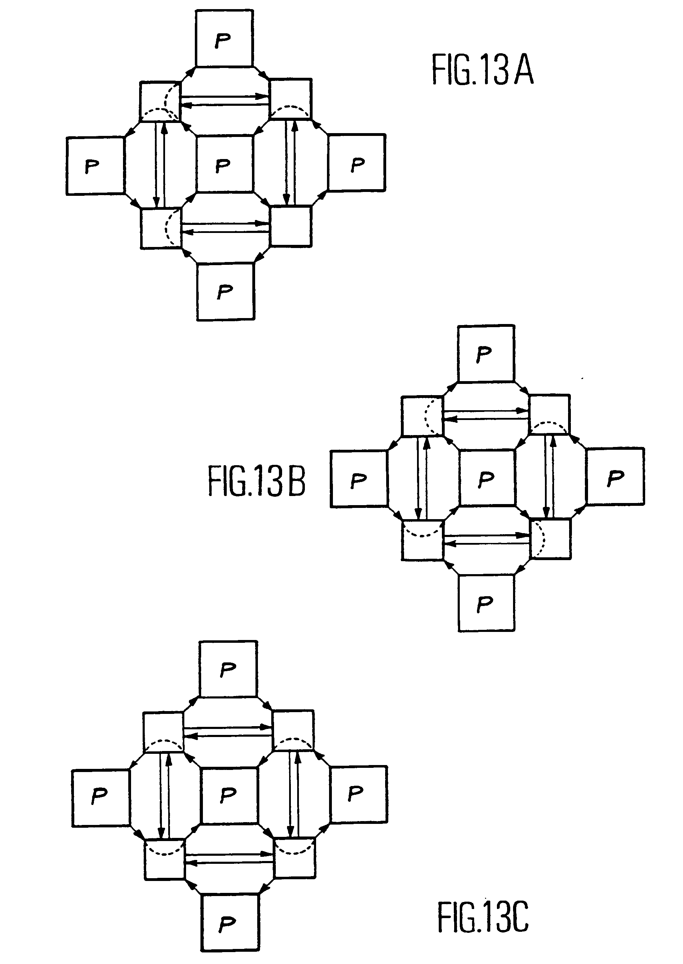

Les communications supportées par le réseau sont au minimum celles décrites sur la figure 13: des communications sud vers nord et est vers ouest étant illustrées sur la figure 13A ; des communications mélangées étant illustrées sur la figure 13B ; des communications est-ouest étant illustrées sur la figure 13C ; Chaque communication illustrée sur ces figures ayant une communication « duale ».

D'autres communications peuvent bien entendu être envisagées.

Dans le procédé de tolérance aux fautes de ce réseau, les processeurs supplémentaires Sp de la dernière ligne sont utilisés pour remplacer des processeurs élémentaires P défaillants dans les autres lignes.

### Exemple d'un mode de réalisation d'un tel réseau de processeurs

Dans ce mode de réalisation le réseau de processeurs est constitué d'une matrice de neuf processeurs et de seize éléments d'interconnexion. Chaque processeur P est un simple élément de calcul intégrant une unité logique et arithmétique, un ensemble de registres de travail et une logique de test permettant d'effectuer le test automatique du processeur (test dit « intégré »). Lors de l'exécution d'un programme de test, cette logique émet un signal de test d'intégrité t_i indiquant si le processeur est défaillant. Le processeur P n'est pas décrit ici car il est bien connu de l'homme de métier.

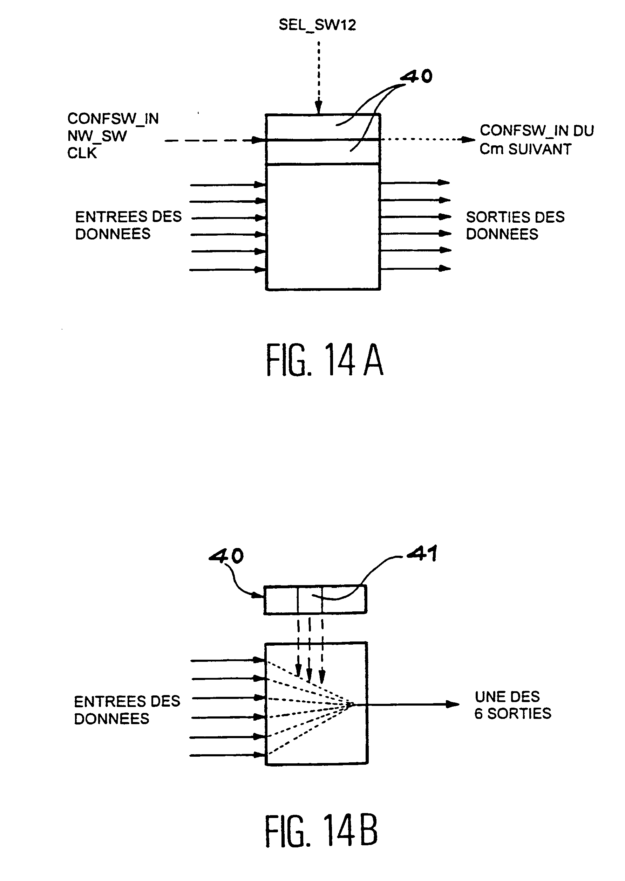

Un élément d'interconnexion est du type de celui illustré sur la figure 10, les éléments d'interconnexion des figures 11A à 11H n'étant que des dérivés simplifiés de celui-ci. Cet élément d'interconnexion, illustré sur la figure 14A, est composé de six multiplexeurs de données de six entrées vers une sortie. Chacun de ces multiplexeurs est commandé par trois fils de sélection de la voie de sortie afin de permettre de relier chacune des sorties de l'élément d'interconnexion à n'importe quelle entrée. La largeur du champ de donnée de chacune des voies est ici de 4 bits. Les sélections des six multiplexeurs sont mémorisées dans deux registres 40 de 18 bits chacun (3 bits de sélection pour chaque multiplexeur) à l'intérieur de l'élément d'interconnexion. Ces registres 40 ont une double fonctionnalité puisqu'ils peuvent fonctionner en registres normaux et en registres à décalage lors du chargement. Ces deux registres de configuration 40 permettent à deux configurations différentes du réseau de cohabiter dynamiquement.

La figure 14B illustre le détail du contrôle d'un multiplexeur, la zone 41 étant la zone de commande de ce multiplexeur dans un des registres 40.

Le chargement des deux registres de reconfiguration 40 s'effectue en série grâce aux signaux nw_sw et confsw_in. Le signal nw_sw (« not-write switch ») autorise l'écriture du signal de configuration confsw_in (« configuration switch input ») dans la première bascule d'un registre 40 lorsqu'il est à l'état bas et interdit cette écriture à l'état haut. Le chargement des configurations est synchrone et obéit donc à l'horloge globale du système clk. Lorsque l'écriture de confsw_in est autorisée dans la première bascule d'un des registres 40, le contenu de cette bascule est chargé dans la deuxième bascule et ainsi de suite jusqu'à la dernière bascule, dont le contenu constitue le signal confsw_in de l'élément d'interconnexion suivant. Le signal sel_sw12 (« selection switch configuration 1/2 ») permet de sélectionner, lors du chargement, le registre où charger les configurations et également de sélectionner la configuration des éléments d'interconnexion de manière dynamique, c'est-à-dire de faire varier la configuration des éléments d'interconnexion lors du déroulement d'un programme, à chaque coup d'horloge. Un élément d'interconnexion est ainsi composé de 24 bits de données en entrée, de 24 bits de données en sortie, de deux signaux de chargement de configuration et d'un signal de changement dynamique de configuration (en cours de fonctionnement normal) entre les configurations chargées dans les registres internes des éléments d'interconnexion.

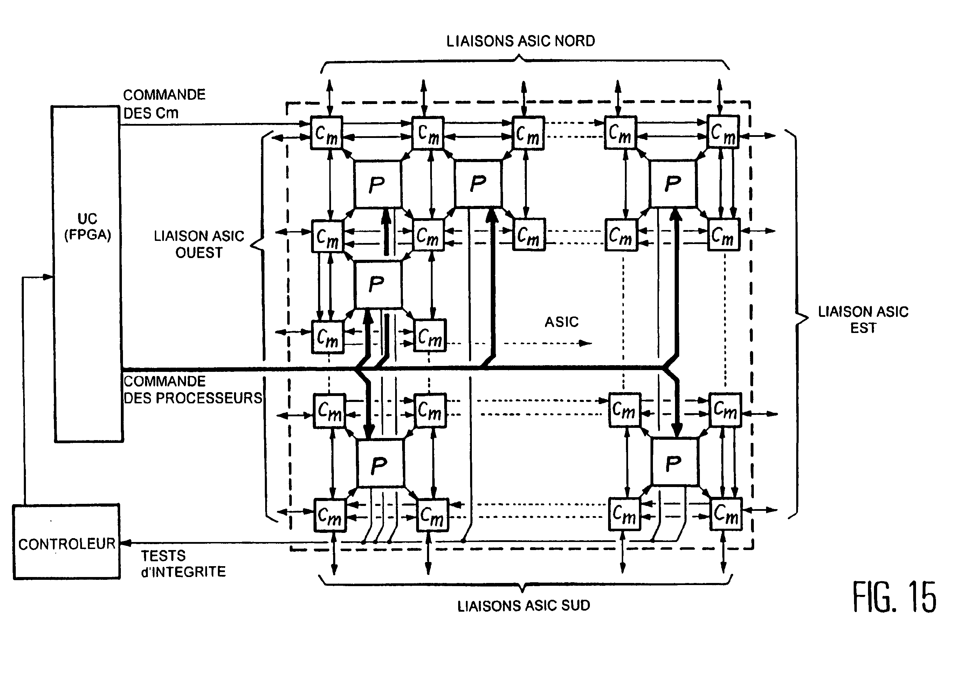

Les processeurs P et les éléments d'interconnexion Cm sont connectés comme illustré sur la figure 15. L'ensemble forme la matrice de processeurs qui est commandée par une unité de contrôle UC. Cette unité de contrôle UC envoie les instructions aux processeurs permettant d'effectuer les opérations et contrôle les éléments d'interconnexion à l'aide des trois signaux confsw_in, nw_sw et sel_sw12 précédemment cités. L'unité de contrôle permet ainsi le déroulement de programmes normaux ainsi que de programmes de test des processeurs. L'unité de contrôle effectue de façon périodique le test des processeurs qui retournent à un contrôleur leur état par l'intermédiaire du signal t_i. Le diagnostic de la matrice de processeurs est alors effectué par le contrôleur grâce à l'interprétation des signaux t_i de tous les processeurs. Le contrôleur peut effectuer le calcul des nouvelles configurations des éléments d'interconnexion correspondant à l'état de la matrice de processeurs. Il informe alors l'unité de contrôle de ces nouvelles configurations. L'unité de contrôle envoie alors les informations permettant de configurer les différents éléments d'interconnexion, puis envoie les commandes d'exécution des programmes de calculs sur les processeurs actifs.

La matrice de processeurs ainsi que les éléments d'interconnexion peuvent être intégrés dans un circuit intégré spécifique (ASIC). L'unité de contrôle peut être intégrée dans des composants de logique reconfigurable (FPGA pour « Field Programmable Gate Array »), ceci pour une plus grande souplesse d'utilisation. Le contrôleur peut être réalisé à l'aide d'un ordinateur, d'un composant FPGA ou même d'un module dédié.

Dans la description précédente, on a envisagé une commande dynamique séparée de chacun des éléments d'interconnexion par l'unité de contrôle ; on pourrait, sans sortir du cadre de l'invention, effectuer ladite commande de façon statique, sans passer par l'unité de contrôle, par exemple par le biais d'un processeur extérieur au système.

### Exemple d'un réseau d'hypercubes

Un grand nombre d'architectures qui possèdent la règle de régularité, ou que l'on peut ramener à une structure régulière telle que définie précédemment peuvent bénéficier du procédé de placement de l'invention.

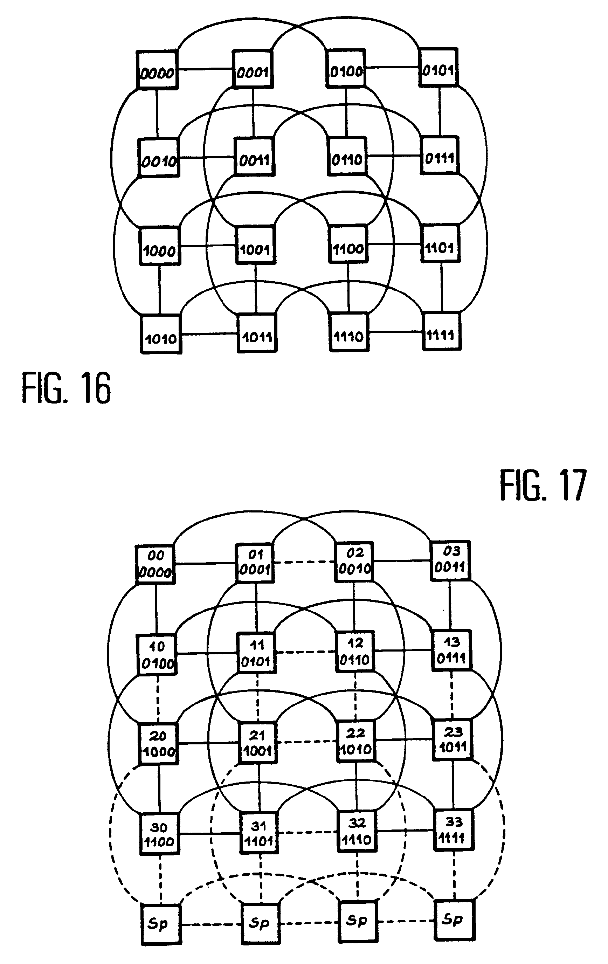

Un exemple de réseau régulier est l'hypercube à n dimensions. Dans ce réseau de processeurs, chaque processeur est relié directement à n autres processeurs en respectant une règle sur la numérotation binaire des processeurs (chaque processeur est relié aux processeurs dont le mot binaire est adjacent, i.e. dont le numéro binaire ne diffère que d'un seul bit). Un exemple d'hypercube de dimension 3 et comprenant donc 16 processeurs est donné sur la figure 16.

Cette structure, qui est régulière lorsqu'elle est représentée dans l'espace, perd sa régularité sur le papier par un effet de perspective. Mais elle perd également sa régularité lorsqu'elle est réalisée sur une carte électronique qui n'accepte que des composants sur sa surface. Afin de prendre en compte ce point, le réseau présenté sur la figure 17 montre les liens réels, les liens virtuels qui permettent de rendre la structure régulière en deux dimensions, et les processeurs supplémentaires Sₚ avec les liens (virtuels) les reliant à la structure principale.

On se ramène ainsi à une structure 2-D régulière comprenant quatre processeurs supplémentaires. La notion de distance qui définit la mesure pour le placement « au plus près » des processeurs est une distance calculée par rapport à cette structure. Dans ces conditions, les algorithmes de placement sont les mêmes que ceux utilisés pour le maillage 2-D, la réalisation physique du réseau primant sur sa fonction logique.

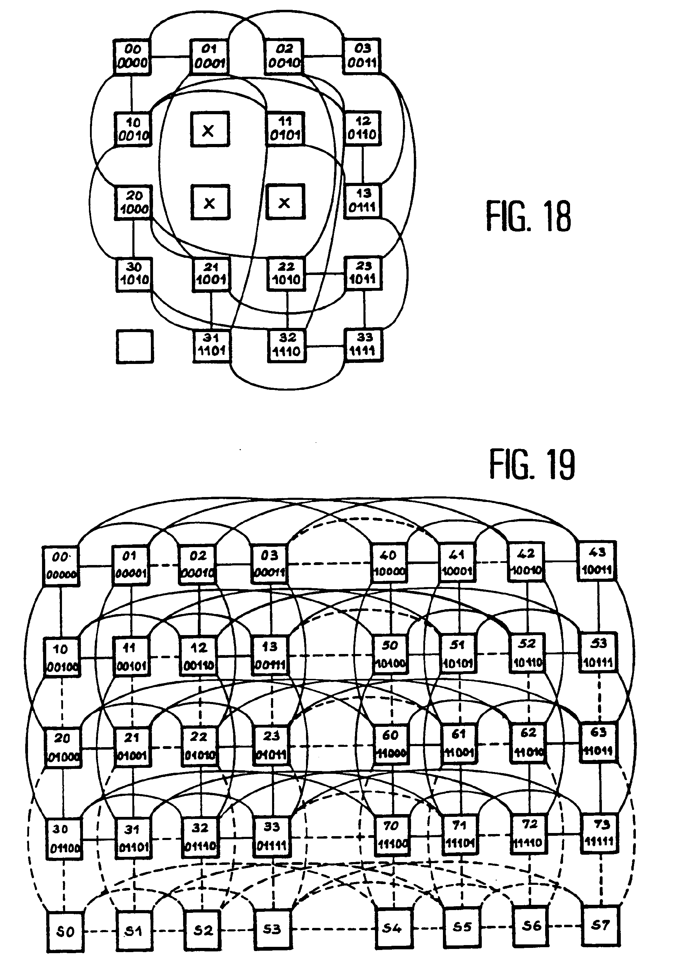

La figure 18 montre alors un exemple de reconfiguration obtenue avec trois processeurs fautifs. les liens en traits pleins sont les liens physiques qu'il faut réaliser de façon à conserver la structure d'hypercube.

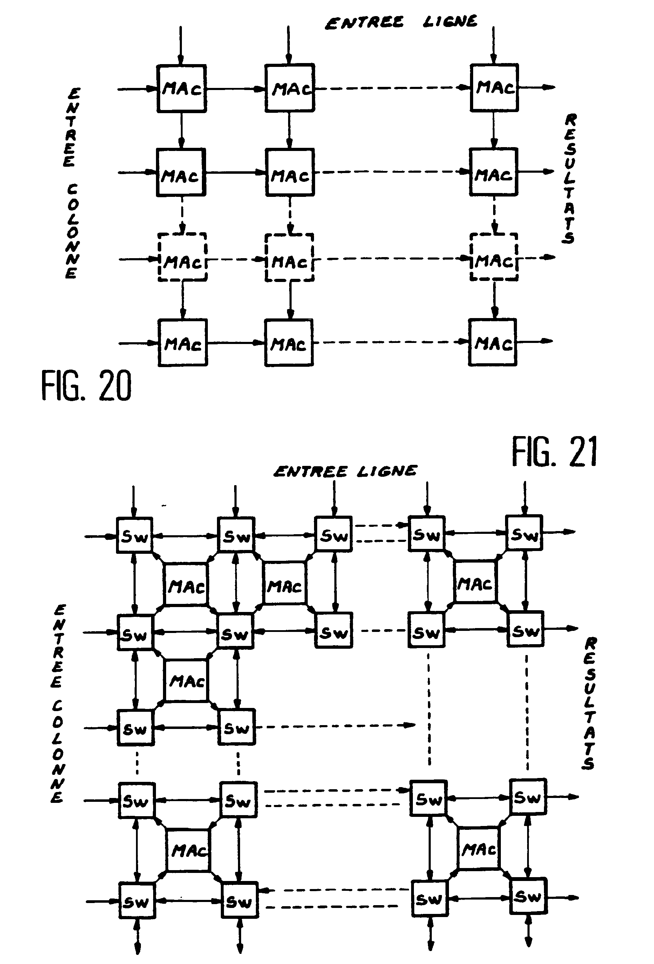

Enfin, la figure 19 montre une extension du principe de liens virtuels pour un réseau hypercube de dimension 4 comprenant une ligne de processeurs supplémentaires. L'algorithme de placement utilisé est alors le même que celui utilisé pour la structure maillage 2-D comprenant 8 lignes × 4 colonnes et une ligne de processeurs supplémentaires.

Le procédé de reconfiguration ne restreint pas le choix de la structure tolérante aux fautes sur laquelle peut être réalisée une telle structure, qui peut donc être tout à fait arbitraire.

Le procédé de l'invention peut être également utilisé en vue d'obtenir une structure tolérante aux fautes, dans des architectures des systèmes électroniques numériques utilisant un grand nombre d'éléments fonctionnels identiques interconnectés en ligne, en matrice ou en hypercube. La seule contrainte est d'assurer que chaque élément fonctionnel soit testable soit de manière locale, soit de manière globale afin que l'algorithme de placement/routage puisse avoir la connaissance des éléments fonctionnels défaillants.

Il est difficile d'identifier toutes les architectures électroniques capables de tirer profit de l'invention. On peut toutefois présenter quelques exemples.

### • Corrélateur 1D ou 2D

Il s'agit de l'association en ligne ou en matrice d'éléments fonctionnels dont le rôle est d'effectuer une multiplication des entrées suivie d'une addition du résultat de cette multiplication avec le résultat précédent. On parle alors de Multiplieur Accumulateur (MAc), comme illustré sur la figure 20. Les données « entrée ligne » sont corrélées avec les « entrée colonne » grâce à des cellules Multiplieur Accumulateur (MAc) organisées en tableau, toutes identiques. Il est alors facile de mettre en oeuvre le procédé de l'invention, comme illustré sur la figure 21. La dernière ligne de la matrice constitue la ligne de « MAc spare ».

### • Architecture de matrice de blocs de calculs de la transformée de Fourier rapide (FFT)

Cette architecture est également organisée autour d'un assemblage en matrice d'éléments fonctionnels de type MAc avec un schéma d'interconnexion plus complexe, en multi-étages (papillon FFT) mais toujours avec deux entrées et deux sorties par MAc. L'ajout d'une ligne supplémentaire d'éléments fonctionnels ainsi que des éléments de commutation permet de tolérer des défaillances sur la structure logique complète.

Ces deux derniers exemples montrent que le procédé de l'invention est utilisable sur des architectures électroniques numériques interconnectant un ensemble d'éléments fonctionnels identiques, autres que des processeurs. Les structures très régulières des composants FPGA (« Field Programmable Gate Array » interconnectant en matrice également des blocs de logique reconfigurable (à base de mémoire RAM par exemple) peuvent également tirer parti du procédé de l'invention.

Enfin, le domaine des télécommunications doit également tirer profit du procédé de l'invention. En effet, dans les routeurs de messages par exemple, des éléments fonctionnels identiques sont interconnectés pour former le système complet.

### REFERENCES

[1] « Architectures électroniques » (CEA Technologies n° 29 « Le traitement du signal et de l'image », pages 3-5)
[2] « Handwave-Efficient and Highly-Reconfigurable 4-and 2-Track fault Tolerant Designs For Mesh-Connected Multicomputers » de Nihar R. Mahapatra et Shantanu Dutt (IEEE, 1996, pages 272 à 281)
[3] "New algorithms for reconfiguring VLSI/WSI arrays" de Theodora A. Varvarigou, Vwani I. Roychowdhury et Thomas Kailath (Journal of VLSI signal processing, NL, Kluwer Academic Publishers, Dordrecht, vol. 3, n°4, 1 octobre 1991 (1991-10-01), pages 329-344, XP000262126 ISSN:0922-5773).

## Revendications

1. Procédé de reconfiguration d'un réseau d'éléments fonctionnels identiques parallèles avec tolérance aux fautes de ces éléments fonctionnels, le réseau comportant lesdits éléments fonctionnels de base (P), des éléments fonctionnels supplémentaires (Sp) et des éléments d'interconnexion (Cm) de ces éléments fonctionnels, ledit procédé comprenant :
- une étape de placement des éléments fonctionnels du réseau logique ;
- une étape de routage consistant en une programmation des éléments d'interconnexion sur le réseau physique, en choisissant un nombre maximal d'éléments d'interconnexion pouvant être traversés entre deux éléments fonctionnels voisins utilisant un algorithme de recherche du plus court chemin,
**caractérisé en ce qu'**il comprend une unité de contrôle et **en ce que** :
- on détermine un ordre de placement des éléments fonctionnels du réseau qui est constitué d'un élément fonctionnel d'origine et d'une suite d'éléments fonctionnels englobant tous les éléments fonctionnels ;
- pour chacun des éléments fonctionnels on essaie de le placer en commençant par sa place logique puis, si nécessaire en cas d'échec, en chacune des places situées à une distance 1, à une distance 2... de la place logique de cet élément fonctionnel, avec comme restriction qu'une et une seule place supplémentaire doit être utilisée par rapport aux places possibles des éléments fonctionnels précédemment placés, en arrêtant lorsque S+1 places ont été essayées , S étant le nombre d'éléments fonctionnels supplémentaires ;
- si S+1 places ont été essayés sans succès, on revient à l'élément fonctionnel précédent dans l'ordre de placement et on passe à la place suivante pour cet élément fonctionnel.

2. Procédé selon la revendication 1, dans lequel, lorsque tous les éléments fonctionnels sont placés, on vérifie pour chaque dimension du réseau que l'ordre logique est respecté pour chaque couple d'éléments fonctionnels, si ce n'est pas le cas on inverse les places de ces éléments fonctionnels.

3. Procédé selon la revendication 1, dans lequel l'ordre de placement est défini ainsi : l'élément fonctionnel d'origine est l'élément fonctionnel en haut à gauche, les éléments fonctionnels suivants sont les éléments fonctionnels à droite et en bas de l'élément fonctionnel d'origine, et ainsi de suite en respectant une diagonale.

4. Procédé selon la revendication 1, dans lequel on découpe le réseau en blocs de l'élément fonctionnel et on définit un ordre de placement des blocs en partant d'un bloc d'origine et en parcourant tous les blocs de bloc voisin en bloc voisin, les places possibles pour les éléments fonctionnels d'un bloc ne comportant pas de place logique des éléments fonctionnels des blocs placés précédemment.

5. Procédé selon la revendication 1, dans lequel les éléments fonctionnels sont des processeurs.

## Claims

1. A method for reconfiguring a network of parallel identical functional elements tolerant to the faults of these functional elements, the network comprising said basic functional elements (P), spare functional elements (Sp), interconnecting elements (Cm) of these functional elements, said method comprising:
- a step of positioning the functional elements of the logic network;
- a routing step of programming interconnecting elements on the physical network, by choosing a maximum number of interconnecting elements which can be passed between two neighbouring processors using a shortest track search algorithm, **characterized in that** it comprises a control unit and **in that**
- a network functional element positioning sequence which is composed of a starting functional element and a sequence of functional elements including all functional elements is determined;
- for each of the functional elements, it is positioned tentatively starting with its logical position, then, if required in case of failure, in each of the positions located at a distance 1, distance 2, ... from the logical position of this functional element, a restriction being that one and only one spare position is to be used with respect to the possible positions of previously positioned functional elements, stopping when S+1 positions have been tested, S being the number of spare functional elements;
- if S+1 positions have been tested without success, returning to the previous functional element in the positioning sequence and proceeding with the next position for this functional element.

2. Method according to claim 1, wherein, when all functional elements have been positioned, it is checked for each network dimension that the logical sequence is followed for each functional element pair, if not, the positions of these functional elements are inverted.

3. Method according to claim 1, wherein the positioning sequence is defined like this: the starting functional element is the top left functional element, the following functional elements are the functional elements to the right and below the starting functional element, and so on, following a diagonal.

4. Method according to claim 1, wherein the network is divided into functional element blocks, and a block positioning sequence is defined starting with a starting block and going through all the blocks from one neighbouring block to the next, the possible positions for the functional elements of one block not including any logical position of the functional elements of previously positioned blocks.

5. Method according to claim 1, wherein the functional elements are processors.

## Patentansprüche

1. Rekonfigurierungsverfahren für ein Gatter von parallelen identischen Funktionselementen mit Toleranz für die Fehler dieser Funktionselemente, wobei das Gatter die genannten Basisfunktionselemente (P), zusätzliche Funktionselemente (Sp) und Zusammenschaltungselemente (Cm) dieser Funktionselemente aufweist und das genannte Verfahren dabei umfasst:
- einen Platzierungsschritt der Funktionselemente des logischen Gatters;
- einen Routing-Schritt, bestehend aus einer Programmierung der Zusammenschaltungselemente in dem physischen Gatter, indem man eine maximale Anzahl von Zusammenschaltungselementen wählt, die zwischen zwei benachbarten Funktionselementen durchquert werden können, wobei man einen Algorithmus zur Suche des kürzesten Wegs anwendet,
**dadurch gekennzeichnet, dass** es eine Kontrolleinheit umfasst, und **dadurch**:
- dass man eine Platzierungsordnung der Funktionselemente des Gatters bestimmt, gebildet durch ein Ausgangsfunktionselement und eine alle Funktionselemente umfassende Folge von Funktionselementen;
- dass man für jedes der Funktionselemente versucht, es zu platzieren, beginnend in seinem logischen Platz, und dann, wenn im Falle eines Misserfolgs notwendig, in jedem der Plätze mit einem Abstand 1, mit einem Abstand 2... des logischen Platzes dieses Funktionselements, mit der Einschränkung, dass ein und nur ein zusätzlicher Platz in Bezug auf die möglichen Plätze der vorhergehend platzierten Funktionselemente benutzt werden darf, und endend, wenn S+1 Plätze versucht worden sind, wobei S die Anzahl der zusätzlichen Funktionselement ist;
- dass man, wenn S+1 Plätze ohne Erfolg versucht worden sind, zu dem vorhergehenden Funktionselement in der Platzierungsordnung zurückkehrt und für dieses Funktionselement zum nächsten Platz übergeht.

2. Verfahren nach Anspruch 1, bei dem man, wenn alle Funktionselemente platziert sind, für jede Dimension des Gatters verifiziert, dass die logische Ordnung für jedes Funktionselemente-Paar gewahrt ist, und, wenn dies nicht der Fall ist, man die Plätze dieser Funktionselemente umkehrt.

3. Verfahren nach Anspruch 1, bei dem die Platzierungsordnung folgendermaßen definiert wird: das Ausgangsfunktionselement ist das Funktionselement links oben, die nächsten Funktionselemente sind die Funktionselemente rechts und unterhalb des Ausgangsfunktionselements und so weiter, wobei man eine Diagonale einhält.

4. Verfahren nach Anspruch 1, bei dem man das Gatter in Funktionselemente-Blöcke unterteilt und eine Platzierungsordnung der Blöcke definiert, indem man von einem Ausgangsblock ausgeht und alle Blöcke von Nachbarblock zu Nachbarblock durchläuft, wobei die für die Funktionselemente eines Blocks möglichen Plätze keinen logischen Platz der Funktionselemente der vorhergehend platzierten Blöcke umfassen.

5. Verfahren nach Anspruch 1, bei dem die Funktionselemente Prozessoren sind.
